# EUROPEAN PATENT SPECIFICATION

(11) **EP 1 838 961 B1**
(45) Date of publication and mention of the grant of the patent: **22.06.2011**
(21) Application number: 05799507.8
(22) Date of filing: 04.11.2005
(51) Int. Cl.: F03D 1/06, F03D 11/00

(54) **A WIND TURBINE BLADE EQUIPPED INTERNALLY WITH COLLECTION MEANS**
INNEN MIT AUFFANGMITTELN VERSEHENE WINDTURBINENSCHAUFEL
PALE DE CENTRALE EOLIENNE EQUIPEE DE MOYENS DE COLLECTE

(30) Priority: 29.12.2004 DK 200402017; 02.02.2005 DK 200500155
(43) Date of publication of application: 03.10.2007
(73) Proprietor: LM GLASFIBER A/S, 6640 Lunderskov (DK)
(72) Inventor: MOLZEN, Martin, DK-7000 Fredericia (DK); MADSEN, Kristian, Lehmann, DK-7000 Fredericia (DK); BERG, Rene Van Den, NL-1701 LK Heerhugoward (NL)
(74) Representative: Jensen, Peter Kim
(86) International application number: PCT/DK2005/000704
(87) International publication number: WO 2006/069575

(56) References cited:
- EP-A- 1 607 623
- EP-A- 1 607 624
- WO-A-02/48546
- WO-A-2004/036038
- DE-A1- 19 951 346
- PATENT ABSTRACTS OF JAPAN vol. 2003, no. 12, 5 December 2003 (2003-12-05) -& JP 2005 105916 A (DAIWA HOUSE IND CO LTD), 21 April 2005 (2005-04-21)

## Description

The present invention relates to a blade for a wind power plant according to claim 1 composed of at least two blade parts, whereby the blade comprises a cavity.

### Background

A blade is often manufactured from two or more blade parts, shells or blade halves of fibre-reinforced laminates that are glued to each other and to one or more internal bracing beams. Thus one or more cavities is/are formed within the blade. When the blade parts are glued to each other, glue or filler is abundantly applied to ensure complete filling of the glue line. The redundant glue sitting as thick cakes around the glue lines or dropping off within the mould is scraped off and removed to the widest extent possible; however, a fairly large amount unavoidably remains in the blade, in particular along the glue lines, in the outermost and most narrow part of the blade. When the blade is being used, the blade yields and deforms dynamically, and the glue cakes along the glue lines will break loose and be thrown about as lumps within the blade. In theory, it is also conceivable that tools, work gloves, shell residues, etc., are unintentionally left Inside the blade following gluing or during subsequent servicing. Lumps of glue residues, tools and the like, as described above, will all be included in the one term "loose objects" in the following.

Such loose objects are inexpedient within a blade for several reasons. First and foremost they will, when thrown about Inside the blade while the blade rotates, repeatedly strike against the interior blade structure and may have a destroying effect. Additionally, the noise caused by the objects is quite considerable. The noise which is particularly hefty when the turbine starts and stops may moreover contribute to making humans and animals who are in the vicinity of the wind turbine uncomfortable about the wind turbine and hence contribute to prejudicing people against the erection of further wind power plants. Also, the loose objects contribute with additional and unnecessary weight and ensuingly they contribute adversely to the performance of the wind power plant. Finally, there is also a considerable risk of the objects getting stuck or becoming firmly wedged in inexpedient locations within the blade at some point or other, eg in the root of the blade, and hence preventing the blade structure from deforming and operating as intended. This may have a reducing effect on the properties of the blade in respect of strength and rigidity.

Over time, lumps of glue residues may also pulverize as a consequence of their being thrown about within the blade and tum into dust and particles larger than that. Even a blade that is hosed carefully prior to assembly will therefore unavoidably contain a considerable amount of dust after some time. Dust and particles are also undesirable within a blade since, when absorbing humidity, they will agglomerate into large lumps of a very tough consistency with ensuing problems as mentioned above. Humidity as used here and in the following is to be understood as all kinds of liquid-phase or gas-phase substances or both, such as eg water or vapour.

A further aspect of the cavity of a blade is that, invariably, humidity will enter the blade. On the one hand, rain water penetrating via joints and holes in the blade and, on the other, condensation. In order to ensure that the humidity is able to leave the blade, also when in use, a blade is usually provided with drain holes in various locations on the blade. A drain hole may be configured in various ways, the simplest one being by drilling of a hole in the blade of a diameter of typically between 3 and 6 mm. Such drain hole is dimensioned to be large enough to allow humidity to leave, but not large enough for too much rainwater to enter the blade. Large drain holes of a certain diameter may moreover start to emit noise when the blade rotates, which is of course undesirable. Additionally, if the drain holes are large, the loose objects may be thrown out through the holes. Albeit the problems of the loose objects within the blade are solved by this, the solution is inexpedient as the objects may be flung out at high speed and across large distances and present a danger to persons or animals nearby. Conversely, smaller drain holes have a propensity to be clogged by the lose objects from the blade interior and by particles and dust that agglomerate.

### Object and description of the invention

It is the object of the present invention to solve the above-mentioned problems of loose objects, particles and dust inside the cavity or the cavities in a blade for a wind energy plant.

The invention relates to a blade for a wind power plant according to claim 1 composed of at least two blade parts, whereby the blade comprises a cavity, wherein collection means are arranged within the cavity comprising at least one container with at least one opening for receiving e.g. dust, particles or loose objects from the cavity. Hereby it is accomplished that the problems of striking impacts and noise from the loose objects can be eliminated. Moreover, clogging of the drain holes is prevented, and thus they need not be maintained, and likewise the problem of objects being flung out of the drain holes of a blade endangering the surrounding environment is solved. Moreover, the additional weight imposed by the loose objects, particles and dust is collected in the most favourable place in relation to the blade structure, and the collecting means may optionally be constructed such that the collected matter can be removed completely from the blade, whereby weight is saved. Moreover, the invention is advantageous in that it may render the time-consuming and work-intensive collection and removal of glue residues and dust during and after joining by gluing of the parts to the blade superfluous.

In addition to said advantages such container is advantageous in that it can be configured such that it can be emptied of the matter collected therein or it may be exchanged or optionally removed altogether whereby weight is saved. Moreover, a container may be configured from a flexible material, or a shape adapting it to the blade geometry can be imparted thereto.

Moreover the blade relates to a blade with at least one container in accordance with the above, wherein the container further comprises securing means, such as e.g. an adhesive, or wherein the opening of the container comprises at least one flap. The described embodiments are advantageous in being simple and inexpensive to manufacture and by efficiently causing the matter collected in the container to stay in the container.

Moreover the invention relates to a blade with at least one container according to the above, wherein the container comprises an opening which is at least partially funnel-shaped, or a number of such at least partially funnel-shaped openings arranged in succession of each other. Such funnel-shaped openings can, in a simple manner, ensure that the objects collected in the container, do not easily leave it again. This can be further ensured by successive arrangement of a number of funnel-shaped openings like in a fyke net.

According to a further embodiment of the invention, a blade is equipped with at least one container according to the above, wherein the container is arranged in the proximity of the blade root. Hereby the weight of the container and the collected matter is gathered in the proximity of the blade root, whereby the moment of inertia of the blade is reduced.

According to one embodiment a blade is configured with at least one container according to the above, wherein the container Is arranged in a chamber, which chamber is at least partially separated from the remainder of the blade.

Moreover the invention relates to a blade as described above, wherein the container comprises at least one filter means. Hereby dust and particles are collected in the filter means, meaning that it does not clog the drain holes. This way of collecting the dust and particles is also much easier and saves more time compared to removal of the dust and particles by e.g. hosing or vacuum-cleaning the blade prior to assembly.

Moreover the invention relates to a blade for a wind power plant composed of at least two blade parts, whereby the blade comprises a cavity, in which cavity, two or more filter means are provided for collecting eg dust, particles or loose objects from the cavity. The advantages hereof are as described above.

Moreover the invention relates to a blade according to the above disclosures, wherein the filter means are arranged between at least two at least partially separate chambers in the blade. Such collection means may comprise eg fine-mesh nets, filters or sieves of some kind. Hereby the movement of the loose objects is restricted to the chamber in which they are present and the striking impacts and the ensuing noise is thus considerably reduced, while simultaneously the humidity in the blade is still able to run through the entire blade and leave by the drain holes.

### Brief description of drawings

In the following the invention will be described with reference to the figures, wherein
Figure 1 shows a blade for a wind power plant equipped with filters in the blade tip and in front of the drain holes;
Figure 2 shows a collection container for loose objects arranged at the blade root of a blade of a wind turbine;
Figure 3 shows a collection container with a funnel-shaped opening seen in a perspective and sectional view;
Figure 4 shows a cassette-shaped collection container with funnel-shaped opening, seen in a perspective and sectional view and configured from a web-like material;
Figure 5 shows a collection container with a flap;
Figure 6 shows a collection container with a flexible tongue-shaped flap;
Figure 7 shows an embodiment of a collection container for loose objects constructed interiorly of the blade of a wind turbine, at the blade root; and
Figure 8 shows a blade for a wind turbine with several chambers separated by sieves and with collection containers In various places;
Figure 9 shows a blade for a wind turbine with filters configured as tubular elements.

### Description of embodiments

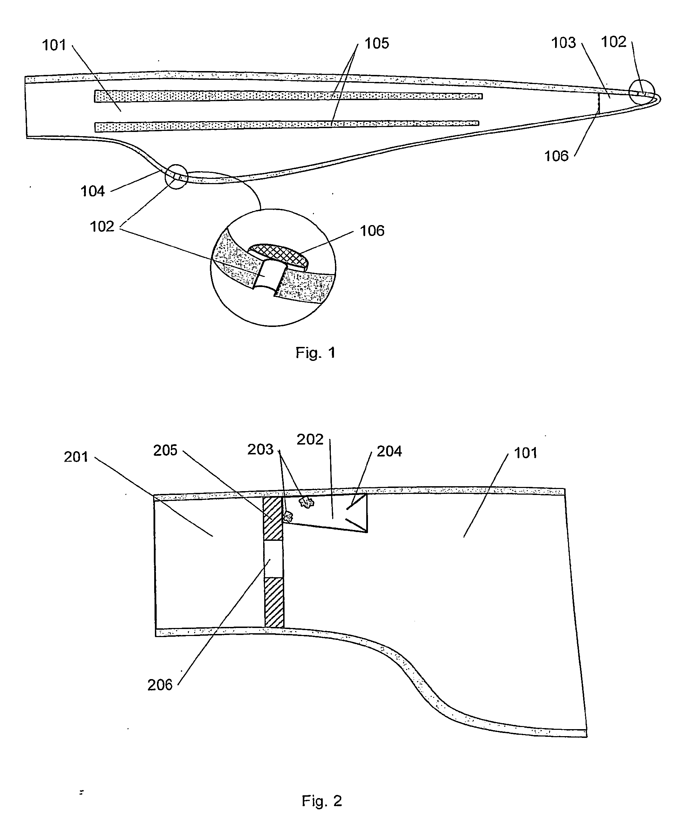

Figure 1 is a cross-sectional view of a blade 101 for a wind power plant. A blade is typically assembled from two blade shells and a number of interior bracing beams 105, whereby the blade contains one or more cavities. In order to allow humidity to leave the blade while In use, the blade may be equipped with a number of drain holes 102. In the shown embodiment the drain holes 102 are arranged in the blade tip 103 and right behind the widest section on the blade at the rear edge 104 of the blade. According to one embodiment of the invention, a number of filters 106 are arranged interiorly of the blade 101. They can advantageously be located in front of each drain hole 102, whereby objects or particles larger than the mesh size of the filter are prevented from entering the drain hole 102, and consequently they cannot clog it. Smaller particles either travel through the filter or are captured therein. According to yet an embodiment of the invention the filter is arranged such that it can be cleaned or exchanged if, in time, it is worn out or clogs. Cleaning or exchange can be performed eg by enabling screwing of the filter 106 out of through the drain hole 102 or by arranging the filter 106 in immediate vicinity of a cover through which the filter can be serviced. Moreover, the filter can be integrated with the lightning receptor of the blade, which may be configured eg as described in Danish patent No. DK 174232. A filter 106 can also be arranged transversally of the blade as shown in the Figure. This is most advantageously accomplished far towards the blade tip 103, whereby as much as possible of the blade's dust or particles will be captured there and access thereof to the drain hole 102 will be hindered.

Figure 2 shows a sectional view of a blade 101 down by the blade root 201, where the blade is mounted on the hub. To capture and collect loose objects that are flung around interiorly of the blade, a container 202 is arranged in accordance with the invention that the loose objects 203 may drop into. In the shown embodiment the container 202 is shown with an opening 204 configured such that the objects do not readily leave again. Such container 202 for collection may advantageously be arranged in proximity of the blade root 201, as the objects are very likely to be flung past during the rotating movement of the blade. Moreover, the excess weight is advantageously gathered as close to the axis of rotation of the wind turbine as possible, whereby the moment of inertia of the blade is reduced. A further advantage provided with such arrangement of the collection container 202 is that here a person will have ready access to the container. If the blade 101 is configured with a working platform 205 a distance into the blade as shown in the figure, it will most often be provided with a manhole 206 for passage further into the blade 101. The collection container 2002 can thus be emptied of captured objects, be exchanged or optionally entirely removed, as needed. A collection container 202 may, in accordance with the invention, be configured as an independent unit or be built on parts of or Integral with the blade 101 as such or the bracing beams 105. A collection container according to the invention may furthermore serve as collector of water that has penetrated into the blade. As is the case with other loose objects, the configuration of the collection container has the effect that once water in a given amount has entered the container it is able to leave again only with difficulty. In that case the collected water will either be drained off continuously or occasionally or be emptied once in a while along with other collected objects. Different embodiments are illustrated in the following figures.

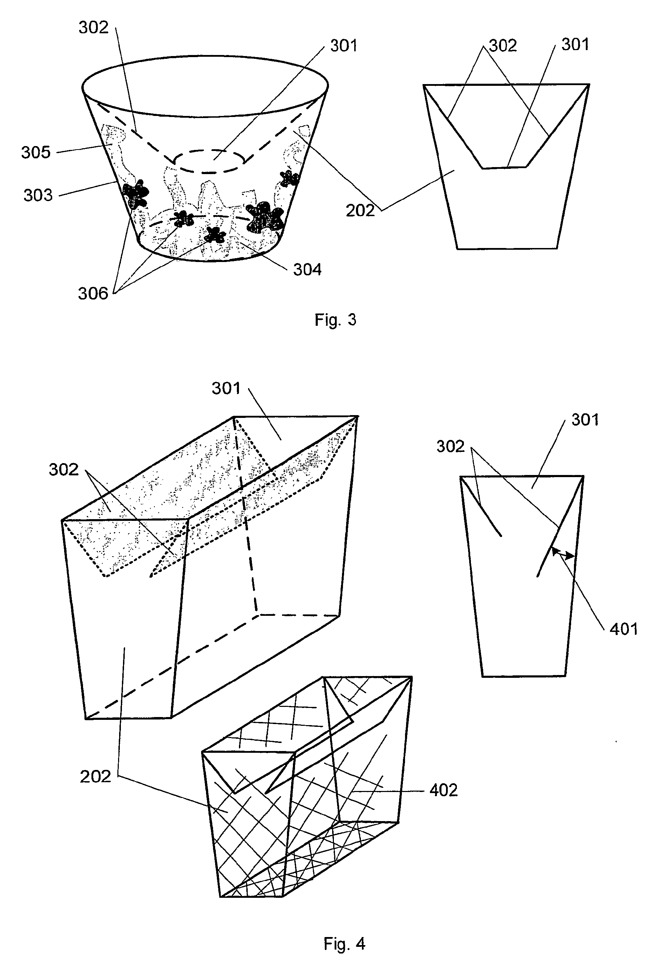

According to one embodiment of the invention a collection means is configured at outlined in Figure 3 as a container 202 with one or more openings 301 for receiving loose objects. In the Figure the container 202 is shown, on the one hand, in a perspective view, and, on the other, in a cross sectional view. In the shown embodiment, the container 202 is cylindrical, but the shape is not significant to the invention and may be eg square or irregular. According to yet an embodiment, the opening or openings 301 are funnel-shaped with inclined and narrowing sides 302, whereby objects that enter cannot easily fall out again. As shown in the perspective view, the container 202 on parts of the internal sides 303 and the bottom 304 may be applied with eg adhesive or other securing means 305 for further securing of the captured matter 306. According to a further embodiment the container can be manufactured as a fyke net with several narrowing, funnel-shaped openings 301 in succession.

Figure 4 shows a collection container 202 in the shape of a box or a cassette. The container is shown in two different embodiments in perspective view and also in a cross sectional view. The box has one or more openings 301, through which the loose objects may travel. In the shown embodiment the container 202 is configured with narrowing sides 302 from the opening 301 and inwards, such that the objects are captured in the container and can only with difficulty fall out again. The narrowing sides 302 may be mounted on or near the opening or sides of the container or may be flexible and bendable. The narrowing sides may moreover be of varying size and angled 401 differently as Illustrated in the cross-sectional view. A collection container may conceivably be made of many different, but preferably light materials, such as plastics, rubber or fabric. Moreover the container can be made of massive material or in an alternative embodiment be made of a net-like and open material 402 as outlined at the bottom of Figure 4. The collection container 202 shown in Figure 4 is advantageous in being simple to manufacture and may eg be folded or bent from a single material sheet. The sides of the collection container 202 need not be straight as shown in the Figure; rather they may just as well be curved or of Irregular shape.

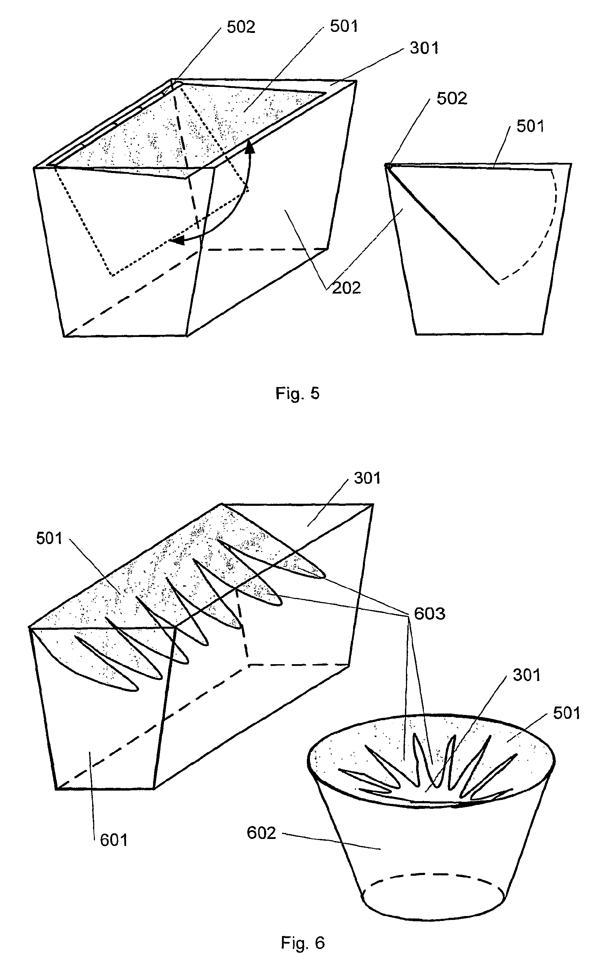

Figure 5 shows a further embodiment of a collection means according to the invention, wherein the container 202 is equipped with a flap 501 that fully or partially covers the opening 301 of the container. The flap 501 is of such kind that it moves a distance into the container upon influence from the outside from eg the loose objects and such that the flap 501 reverts to its starting position where it blocks the opening 301 when the influence ceases. The flap 501 may be mounted eg by means of a spring-biased hinge 502 or may comprise a flexible and resilient articulation. Finally, the flap may be configured such that it is activated by gravity and opens once per blade rotation. Thus, by the location and construction of the collection means it is possible to accomplish that the flap opens and correspondingly closes when needed.

A further embodiment of a collection means according to the invention is shown in Figure 6, wherein, on the one hand, a box-shaped container 601 and, on the other, a fyke-shaped container is outlined. Both containers are provided with a flap 501 in or near the opening 301, which flap is narrowed towards the container interior. The flap 501 is made of a piece of material, in which incisions are either carved or cut or made by other method, thereby imparting to the flap a shape of a comb with a number of consecutive tongues 603. Advantageously the flap 501 can be made of a flexible material, such as a soft plastics material, which is advantageous on the one hand to enable it to resist impacts from the incoming objects and, on the other, to enable that a flap 501 can thus be adapted to the sides of a container, whether they are straight or curved.

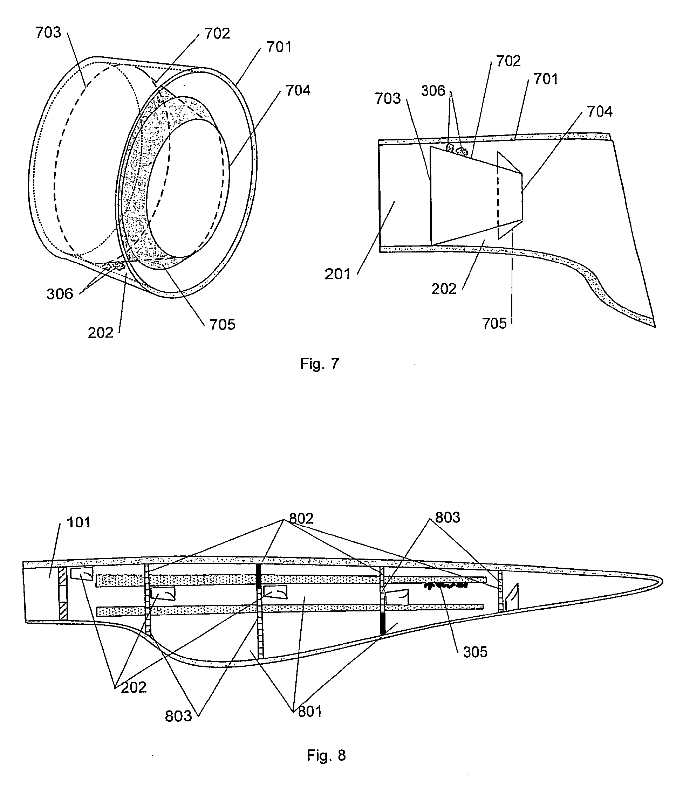

The container for collecting the loose objects may be configured as an Integral part of the blade of the wind turbine. That means that the container may be constituted of parts mounted on the interior of a blade shell, one of the interior bracing beams or some other blade part. Figure 7 shows an embodiment, wherein a collection container 202 is sitting all the way round the inner side of the blade shell 701 down into or near the blade root 201. In the Figure the lowermost part of the blade is shown in a perspective view, seen a distance away on the blade, and next to it the same is shown in cross sectional view. In the shown embodiment, the collection container 202 is configured from a cylindrical collar 702, being at the one end 703 mounted on the inner side of the blade shell 701. On or near the second end 704 of the collar 702, yet a collar or cuff 705 is mounted, whereby loose objects 306 will be captured In the cavity between the cylindrical collar 702 and the blade shell 701. Of course, the container need not be sitting all the around the blade interior and, likewise, it may also be built integrally with a blade or beam part in other ways.

Moreover, the Invention relates to a blade 101 which is divided into chambers 801 that are completely or fully separated in relation to each other. This is shown in Figure 8. There, a blade is divided by a number of partition walls 802 extending transversally to the longitudinal expanse of the blade. The particulars of how the blade is divided is of no consequence to the Invention and may also be configured eg with partition walls 802 diagonally relative to the longitudinal expanse of the blade. The partition walls 802 are configured at least partially by sieves 803, such as a fine-meshed net, thereby enabling humidity and fine particles to pass and leave the blade through the drain holes intended therefor. By such division into chambers 801 as described above it Is accomplished that the movement of the loose objects is restricted to the chamber in which they are located. The energy of their movements due to the rotation of the blade is thus limited, and the impact applied by the objects when they hit the blade is therefore correspondingly reduced. According to a further embodiment of the invention one or more collection containers 202 like the ones described above is/are arranged in each chamber 801, which then collect(s) the loose objects from each chamber. The collection may furthermore be accomplished by application of an adhesive or other securing means 305 to an area within the blade interior, in one or more of chambers 801, which adhesive thus captures the loose objects. This is a very simple embodiment which may be advantageous if it is primarily desired to collect the loose objects, but not necessarily dispose of them.

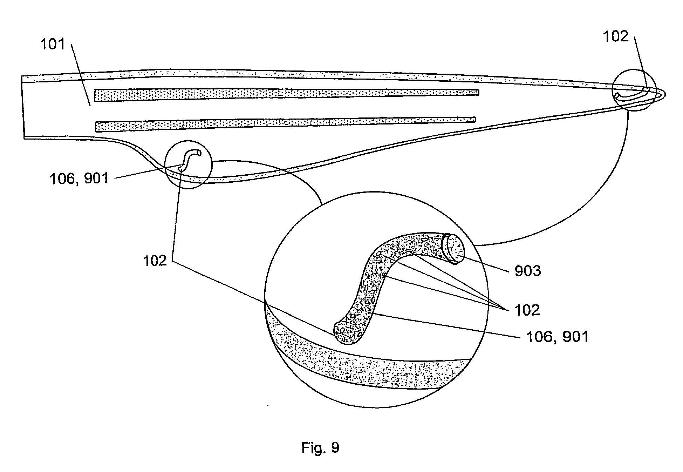

According to yet an embodiment, as shown in Figure 9, a filter 106 may be arranged at the end of one or more of drain holes 102, where the filter or sieve is configured as a tubular element 901 with holes 902 in several locations along the length of the tubular element, like a drain pipe. In that case, the drain-pipe-like filter 901 is deployed from the drain hole and a distance into the blade 101, and thus the humidity is still guaranteed a way out of the blade, even in case the lowermost section around the drain hole is covered in dust or clogged. Optionally the filter is closed at the one end by a plug 903 or the like.

It will be understood that the invention as described In the present description and figures can be modified or changed, while continuing to be comprised by the scope of protection conferred by the following claims.

## Claims

1. A blade (101) for a wind power plant composed of at least two blade parts, whereby the blade comprises a cavity, **characterised in that**, in the cavity, means are provided for collecting dust, particles or loose objects (203) from the cavity, where said collection means comprises at least one container (202) with at least one opening (204) for receiving loose objects (203).

2. A blade (101) with at least one container (202) according to claim 1, **characterised in that** the container (202) further comprises securing means (305), such as e.g. an adhesive.

3. A blade (101) with at last one container (202) according to one or more of claims 1-2, **characterised in that** the opening of the container (202) comprises at least one flap (501).

4. A blade (101) with at least one container (202) according to one or more of claims 1-3, **characterised in that** the opening (204) of the container (202) is at least partially funnel-shaped.

5. A blade (101) with at least one container (202) according to one or more of claims 1-4, **characterised in that** the container comprises at least two at least partially funnel-shaped openings (204) arranged consecutively.

6. A blade (101) with at least one container (202) according to one or more of claims 1-5, **characterised in that** the container is arranged in proximity of the blade root (201).

7. A blade (101) with at least one container (202) according to one or more of claims 1-6, **characterised in that** the container (202) is arranged in a chamber (801), said chamber being at least partially separated in relation to the remainder of the blade (101).

8. A blade (101) according to claim 1-7, **characterised in that** the container comprises at least one filter (106) means.

9. A blade (101) according to claim 1, **characterised in that** the collection means is arranged between two, at least partially separate chambers (801) in the blade.

## Patentansprüche

1. Rotorblatt (101) für eine Windkraftanlage, das aus mindestens zwei Rotorblatteilen gebildet ist, wobei das Rotorblatt einen Hohlraum aufweist,
**dadurch gekennzeichnet,**
**daß** in dem Hohlraum eine Einrichtung zum Auffangen von Staub, Partikeln oder losen Gegenständen (203) aus dem Hohlraum vorhanden ist, wobei die Auffangeinrichtung mindestens einen Behälter (202) mit mindestens einer Öffnung (204) zum Aufnehmen von losen Gegenständen (203) aufweist.

2. Rotorblatt (101) mit mindestens einem Behälter (202) nach Anspruch 1,
**dadurch gekennzeichnet,**
**daß** der Behälter (202) ferner eine Befestigungseinrichtung, wie z.B. ein Haftmittel, aufweist.

3. Rotorblatt (101) mit mindestens einem Behälter (202) nach einem oder mehreren der Ansprüche 1 und 2,
**dadurch gekennzeichnet,**
**daß** die Öffnung des Behälters (202) mindestens eine Klappe (501) aufweist.

4. Rotorblatt (101) mit mindestens einem Behälter (202) nach einem oder mehreren der Ansprüche 1 bis 3,
**dadurch gekennzeichnet,**
**daß** die Öffnung (204) des Behälters (202) mindestens teilweise trichterförmig ist.

5. Rotorblatt (101) mit mindestens einem Behälter (202) nach einem oder mehreren der Ansprüche 1 bis 4,
**dadurch gekennzeichnet,**
**daß** der Behälter mindestens zwei teilweise trichterförmige Öffnungen (204) aufweist, die aufeinanderfolgend angeordnet sind.

6. Rotorblatt (101) mit mindestens einem Behälter (202) nach einem oder mehreren der Ansprüche 1 bis 5,
**dadurch gekennzeichnet,**
**daß** der Behälter in der Nähe der Rotorblattwurzel (201) angeordnet ist.

7. Rotorblatt (101) mit mindestens einem Behälter (202) nach einem oder mehreren der Ansprüche 1 bis 6,
**dadurch gekennzeichnet,**
**daß** der Behälter (202) in einer Kammer (801) angeordnet ist, wobei die Kammer in Relation zu dem übrigen Rotorblatt (101) zumindest teilweise separiert ist.

8. Rotorblatt (101) nach Anspruch 1 bis 7,
**dadurch gekennzeichnet,**
**daß** der Behälter mindestens eine Filtereinrichtung (106) aufweist.

9. Rotorblatt (101) nach Anspruch 1,
**dadurch gekennzeichnet,**
**daß** die Auffangeinrichtung zwischen zwei zumindest teilweise separaten Kammern (801) in dem Rotorblatt angeordnet ist.

## Revendications

1. Pale (101) pour une éolienne composée d'au moins deux parties de pale, la pale comportant une cavité, **caractérisée en ce que**, dans la cavité, des moyens sont prévus pour recueillir de la poussière, des particules ou des objets libres (203) provenant de la cavité, lesdits moyens de collecte comportant au moins un réceptacle (202) avec au moins une ouverture (204) afin de recevoir des objets libres (203).

2. Pale (101) avec au moins un réceptacle (202) selon la revendication 1, **caractérisée en ce que** le réceptacle (202) comporte en outre des moyens de fixation (305), tels que par exemple un adhésif.

3. Pale (101) avec au moins un réceptacle (202) selon une ou plusieurs des revendications 1 à 2, **caractérisée en ce que** l'ouverture du réceptacle (202) comporte au moins un volet (501).

4. Pale (101) avec au moins un réceptacle (202) selon une ou plusieurs des revendications 1 à 3, **caractérisée en ce que** l'ouverture (204) du réceptacle (202) est au moins partiellement en forme d'entonnoir.

5. Pale (101) avec au moins un réceptacle (202) selon une ou plusieurs des revendications 1 à 4, **caractérisée en ce que** le réceptacle (202) comporte au moins deux ouvertures au moins partiellement en forme d'entonnoir (204) disposées de manière consécutive.

6. Pale (101) avec au moins un réceptacle (202) selon une ou plusieurs des revendications 1 à 5, **caractérisée en ce que** le réceptacle (202) est disposé à proximité du pied de pale (201).

7. Pale (101) avec au moins un réceptacle (202) selon une ou plusieurs des revendications 1 à 6, **caractérisée en ce que** le réceptacle (202) est disposé dans une chambre (802), ladite chambre étant au moins partiellement séparée par rapport au reste de la pale (101).

8. Pale (101) selon les revendications 1 à 7, **caractérisée en ce que** le réceptacle (202) comporte au moins des moyens de filtrage (106).

9. Pale (101) selon la revendication 1, **caractérisée en ce que** les moyens de collecte sont disposés entre deux chambres au moins partiellement séparées (802) dans la pale.
